(19) Europäisches Patentamt
European Patent Office
Office européen des brevets

(11) **EP 0 911 355 A2**

(12) **EUROPÄISCHE PATENTANMELDUNG**

(43) Veröffentlichungstag:
28.04.1999 Patentblatt 1999/17

(51) Int. Cl.$^6$: **C08G 63/91**, C08G 63/08,
C08G 63/64, C08L 67/04,
C08J 3/24, C08K 5/14

(21) Anmeldenummer: 98119737.9

(22) Anmeldetag: 21.10.1998

(84) Benannte Vertragsstaaten:
AT BE CH CY DE DK ES FI FR GB GR IE IT LI LU
MC NL PT SE
Benannte Erstreckungsstaaten:
AL LT LV MK RO SI

(30) Priorität: 21.10.1997 DE 19746403

(71) Anmelder: Aesculap AG & Co. KG
78532 Tuttlingen (DE)

(72) Erfinder: Schlegel, Jörg
72458 Albstadt (DE)

(74) Vertreter:
Hoeger, Stellrecht & Partner
Uhlandstrasse 14 c
70182 Stuttgart (DE)

(54) **Resorbierbarer Polyester**

(57) Durch die vorliegende Erfindung wird ein resorbierbarer Polyester, welcher in einer Vernetzungsreaktion mit einem Peroxid hergestellt ist, der einfach und kostengünstig herzustellen ist und Hydrolyse-Zeiten aufweist, aufgrund deren er insbesondere in der Implantat-Medizin eingesetzt werden kann, zur Verfügung gestellt, wobei der erfindungsgemäße resorbierbare Polyester einen in siedendem Chloroform unlöslichen Anteil von etwa 10 Gew. % oder mehr, bezogen auf die Gesamtmenge des Polyesters, aufweist.

FIG.1

MASSE [%]

Vergleichsbeispiel ohne Peroxid
Beispiel 1    1% BCUP
Beispiel 2    1% DHBP
Beispiel 3    1% DIPP-2

**Beschreibung**

Die vorliegende Erfindung betrifft einen resorbierbaren Polyester, welcher in einer Vernetzungsreaktion mit einem Peroxid hergestellt ist. Weiterhin betrifft die vorliegende Erfindung ein Verfahren zur Herstellung eines solchen Polyesters sowie eine Verwendung desselben.

Resorbierbare Polymere sind hochmolekulare Kunststoffe, die unter physiologischen Bedingungen, beispielsweise im tierischen oder menschlichen Körper, zu Substanzen abgebaut (hydrolisiert) werden, welche entweder körpereigenen Stoffen entsprechen oder vom Organismus metabolisiert, d.h. chemisch umgewandelt, und dann über reguläre Stoffwechselvorgänge ausgeschieden werden können.

Resorbierbare Polymere haben in den letzten Jahren verstärkt im medizinischen Sektor Verwendung gefunden. Dort konkurrieren sie mit konventionellen Werkstoffen auf den Gebieten der Implantats- und Osteosynthese-Materialien. Sie finden darüber hinaus Anwendung als chirurgisches Nahtmaterial, Wirkstoffträger oder Brandwundenauflage. Für diese vielfältigen medizinischen Einsatzgebiete ist es erforderlich, der betreffenden Indikation angepaßte resorbierbare Kunststoffe zur Verfügung zu stellen.

Zu den bekannten resorbierbaren Polymeren zählen unvernetztes Polyglycolid und Polylactid sowie deren Copolymere. Den resorbierbaren Polymeren ist gemein, daß sie einem stetigen, hydrolytischen Abbau (Degradation) nach Implantation unterliegen. Hierbei ist die Abbaudauer insbesondere von der chemischen Zusammensetzung und Struktur, dem Molekulargewicht und dem Kristallisationsgrad des Polymers sowie den Bedingungen in der unmittelbaren Umgebung des Einsatzgebietes abhängig.

Nachteilig bei den bekannten resorbierbaren unvernetzten Polymeren sind deren äußerst hohe Kristallisationsgrade. Hierdurch werden sehr lange Resorptionszeiten von bis zu mehr als 3 Jahren erhalten. Außerdem entstehen insbesondere in der letzten Phase der Degradation nadelförmige Kristalle, welche zu Reizungen und Hautirritationen lange nach einer Operation führen.

Eine Möglichkeit, die hohe Kristallinität der resorbierbaren Polymere zu reduzieren, besteht in deren Vernetzung. D.W. Grijpma et al., Polymer, 34 (1993), Seiten 1496-1503 beschreiben die Vernetzung verschiedener resorbierbarer Kunststoffe, unter anderem von Poly-L-Lactid, in einer ringöffnenden Copolymerisationsreaktion unter Verwendung eines tetrafunktionellen, bizyklischen Bicarbonats. Die solchermaßen hergestellten resorbierbaren Polymere weisen eine verringerte Kristallinität in Verbindung mit einem etwas schnelleren hydrolytischen Abbau des resorbierbaren Polymers im Vergleich zu den unvernetzten Polymeren auf. Ein solchermaßen aus reinem Poly-L-Lactid hergestelltes Polymer weist nach 80 Wochen bei einer In-Vivo-Degradation noch 85 % seiner anfänglichen Masse auf. Nachteilig ist vor allem, daß der vollständige Abbau desselben bei weitem zu lange für eine medizinische Verwendung dauert.

J. K. Ham et al., J. Macromolecular and scientific chemistry, A. 25 (1988), Seiten 847-869 beschreiben einem resorbierbaren Polyester, hergestellt durch Zugabe eines Radikalinitiators. Es wurden aliphatisch ungesättigte Polyester untersucht, welche durch Copolymerisation mit Maleinsäureanhydrid erhalten wurden. Diese weisen bei Erhöhung der Konzentration des Vernetzungsmittels einen Anstieg der Glastemperatur auf, was auf eine Verstärkung der mechanischen Eigenschaften der betreffenden Polymere schließen läßt. Der hydrolytische Abbau dieser vernetzten Polyester verläuft äußerst heftig innerhalb kürzester Zeit. Solchermaßen hergestellte resorbierbare Polymere sind daher nicht geeignet, auf dem medizinischen Sektor verwendet zu werden.

Nachteilig bei diesen bekannten vernetzten resorbierbaren Polymeren ist weiterhin, daß sie nur äußerst aufwendig herzustellen sind, da entweder die verwendeten Vernetzungsmittel sehr teuer sind oder aber zusätzliche Schritte und weitere Substanzen bei der Herstellung dieser resorbierbaren Polymere notwendig sind. Mit den bekannten vernetzten resorbierbaren Polymeren sind lediglich äußerst kurze bzw. sehr lange Hydrolyse-Zeiten erhältlich, welche deren Anwendung, so überhaupt möglich, auf vielen medizinischen Gebieten, insbesondere in der Implantatmedizin, verhindern.

Es ist daher Aufgabe der vorliegenden Erfindung, einen resorbierbaren Polyester zur Verfügung zu stellen, welcher einfach und kostengünstig herzustellen ist und Hydrolyse-Zeiten aufweist, aufgrund deren er insbesondere in der Implantat-Medizin eingesetzt werden kann.

Diese Aufgabe wird erfindungsgemäß durch einen resorbierbaren, aliphatisch gesättigten Polyester gelöst, welcher in einer Vernetzungsreaktion mit einem Peroxid hergestellt ist und der einen in siedendem Chloroform unlöslichen Anteil von etwa 10 Gew. % oder mehr, bezogen auf die Gesamtmenge des Polyesters, aufweist.

Der erfindungsgemäße Polyester weist Hydrolyse-Zeiten auf, welche deutlich länger als 60 Tage und nicht länger als ungefähr 70 Wochen bei 50 %igem Abbau des Polyesters betragen. Die Hydrolyse-Zeiten liegen damit in einem Bereich, welcher den erfindungsgemäßen Polyester insbesondere zur Herstellung von Gefäßprothesen, Bandersatz und auch Osteosyntheseprodukten prädestiniert. Solche Gefäßprothesen und künstlicher Bandersatz finden in vielerlei medizinischen Anwendungen Einsatz, die zeitlich befristet sind. An diese wird die Anforderung gestellt, daß sie einerseits über einen ausreichenden Zeitraum ähnliche mechanische Eigenschaften wie natürliche Gefäße und Bänder aufweisen, andererseits sollte deren Einsatzzeit auch nicht zu lang sein, um dem Organismus, in welchem die Gefäßprothesen und künstlicher Bandersatz eingesetzt sind, Gelegenheit zu geben, diese Hilfskonstruktionen mit körpereigenem Gewebe zu überziehen und sie auf diese Art und Weise nach und nach zu ersetzen.

Vorteilhafterweise weisen die aus dem erfindungsgemäßen Polyester hergestellten und implantierten Teile über ca. 8 Wochen eine in etwa gleichbleibende Festigkeit auf. Im darauf folgenden Zeitraum findet ab etwa der 20. Woche ein fast linearer Abbau der erfindungsgemäßen Polyester im Körper statt. Durch die Beibehaltung der Festigkeit von aus dem erfindungsgemäßen Polyester hergestellten Teilen in den ersten Wochen nach Implantation derselben in einen tierischen oder menschlichen Körper wird den betreffenden Knochen- oder Gefäßteilen eine optimale Stützung und Stärkung verliehen. Durch den nach dieser Stützungs- und Stärkungsphase erfolgenden fast linearen und daher sehr gleichmäßigen Abbau der aus dem erfindungsgemäßen Polyester hergestellten Teile ist gewährleistet, daß diese Teile vom Körper ohne die Gefahr von Übersäuerung des umliegenden Gewebes durch Hydrolyseprodukte des erfindungsgemäßen Polyesters mit körpereigenem Gewebe überzogen werden. Dies wird auch durch die Eigenschaft des erfindungsgemäßen Polyesters unterstützt, nicht schnell und abrupt, sondern gleichmäßig nicht zu schnell über einen bestimmten Zeitraum abgebaut zu werden.

Von besonderem Vorteil ist, daß die unter Verwendung des erfindungsgemäßen Polyesters hergestellten Gefäßprothesen und künstlicher Bandersatz blutverträglich, bioverträglich und mikroporös sind, wodurch ein Anwachsen des sich neu bildenden Gewebes erst ermöglicht und gefördert wird.

Selbstverständlich kann der erfindungsgemäße Polyester auch als Osteosynthese-Material, Nahtmaterial, Wundverschlußmaterial und als Wirkstoff für Arzneimittel verwendet werden.

Der in siedendem Chloroform unlösliche Anteil des erfindungsgemäßen Polyesters wird mit Hilfe eines Geltests ermittelt. Der Geltest ist eine bekannte Methode zur Bestimmung des Vernetzungsgrades eines Polymers. Bevorzugt liegt der in siedendem Chloroform unlösliche Anteil des erfindungsgemäßen Polyesters in einem Bereich von ca. 10 Gew. % bis ca. 80 Gew. %, weiter bevorzugt in einem Bereich von ca. 20 Gew. % bis ca. 70 Gew. %, bezogen auf die Gesamtmenge des zu lösenden Polyesters. Hierdurch werden hervorragende Ergebnisse, insbesondere bei Verwendung des erfindungsgemäßen Polyesters als Gefäßprothese und künstlicher Bandersatz, erhalten. Die mit dem erfindungsgemäßen Polyester erhältlichen Hydrolyse-Zeiten liegen in einem optimalen Bereich für eine derartige Verwendung.

Ein weiterer Vorteil des erfindungsgemäßen Polyesters ist, daß dieser einfach und kostengünstig in einer einfachen Reaktion herstellbar ist. Ursache hierfür ist insbesondere das einfache Herstellungsverfahren des erfindungsgemäßen Polyesters. Hierzu werden übliche, kommerziell erhältliche Peroxide mit dem für die Herstellung des erfindungsgemäßen Polyesters verwendeten Ausgangsmonomeren vermischt und zur Reaktion gebracht.

Bevorzugt umfaßt der erfindungsgemäße Polyester ein Homopolymer, Random- oder Block-Copolymer oder -Terpolymer eines zyklischen Esters oder einer beliebigen Mischung daraus. Zyklische Ester, insbesondere zyklische D-Lactide, werden bevorzugt verwendet, da sie im Gegensatz zu Polymeren, hergestellt aus nicht-zyklischen Monomeren, eine medizinischen Einsatzzwecken genügende mechanische Festigkeit aufweisen. Über den Anteil des Co- bzw. Terpolymeren lassen sich die mechanischen Eigenschaften des erfindungsgemäßen Polyesters sowie dessen Degradationszeit in einem großen Bereich exakt einstellen.

Als zyklische Ester sind L-Lactid, D-Lactid, Meso-Lactid, Glycolid, Trimethylencarbonat, Dioxanon, Caprolacton oder eine beliebige Mischung daraus bevorzugt. Diese Ausgangsstoffe für die Herstellung des erfindungsgemäßen Polyesters sind Massenprodukte und dementsprechend kostengünstig zu erwerben. Weiterhin weisen sie eine ausreichend hohe Reaktionsgeschwindigkeit in der Vernetzungsreaktion auf, wodurch eine Fertigung des erfindungsgemäßen Polyesters in industriellem Maßstab erst ermöglicht wird.

Als Polyester-Homopolymere sind Poly(L-lactid), Poly(D-lactid), Poly(D,L-lactid), Poly(meso-lactid) oder eine beliebige Mischung daraus bevorzugt. Weiterhin können als Polyester-Homopolymere Poly(glycolid), Poly(trimethylencarbonat), Poly(dioxanon), Poly(caprolacton) oder eine beliebige Mischung aus diesen oder mit den vorstehend erwähnten bevorzugten Polyester-Homopolymeren verwendet werden.

Als Polyester-Homopolymer wird vorzugsweise Poly(L-lactid) und/oder Poly(D,L-lactid) mit einer inhärenten Viskosität im Bereich von etwa 1 dl/g oder größer, bevorzugt 1,5 dl/g oder größer, noch bevorzugter 3 dl/g oder größer, verwendet. Die inhärente Viskosität wird in Übereinstimmung mit der Meßvorschrift DIN 51562 bei einer Temperatur von $25 \pm 0,02°$ C in Chloroform bestimmt. Diese Polyester-Homopolymere lassen sich einfach und kostengünstig herstellen. Die Degradationszeit von aus diesen hergestellten Produkten läßt sich sehr genau einstellen. Es lassen sich somit optimale Ergebnisse bei Verwendung dieser Polyester-Homopolymere als Gefäßprothese oder künstlicher Bandersatz erzielen.

Bevorzugt umfaßt der erfindungsgemäße Polyester als Copolymere Poly(L-lactid-co-D,L-lactid), Poly(L-lactid-co-meso-lactid), Poly(L-lactid-co-glycolid), Poly(L-lactid-co-trimethylencarbonat), Poly(L-lactid-co-ε-caprolacton), Poly(D,L-lactid-co-mesolactid), Poly(D,L-lactid-co-glycolid), Poly(D,L-lactid-co-trimethylencarbonat), Poly(D,L-lactid-co-ε-caprolacton), Poly(meso-co-glycolid), Poly(meso-co-trimethylencarbonat), Poly(meso-co-ε-caprolacton), Poly(glycolid-co-trimethylencarbonat), Poly(glycolid-co-ε-caprolacton) oder eine beliebige Mischung daraus oder mit einem der beschriebenen Polyester-Homopolymeren. Mittels dieser bevorzugten Copolymeren bzw. Mischungen lassen sich Feinabstimmungen der mechanischen Eigenschaften der aus diesen hergestellten Formkörpern für medizinische Zwekke erzielen. Mit diesen Copolymeren oder Mischungen werden dem Endanwender, d.h. in aller Regel dem praktizierenden Arzt, für jede Verwendung geeignete, genau auf den Bedarf zugeschnittene resorbierbare Polyester an die Hand gegeben.

Besonders bevorzugte erfindungsgemäße Polyester-Copolymere umfassen Poly(L-lactid-co-D,L-lactid) mit einem Anteil von D,L-Lactid in einem Bereich von etwa 10 bis etwa 50 Gew. %, Poly(L-lactid-co-trimethylencarbonat) mit einem Anteil von Trimethylencarbonat in einem Bereich von etwa 10 bis etwa 50 Gew. %, Poly(D,L-lactid-co-trimethylencarbonat) mit einem Anteil von Trimethylencarbonat in einem Bereich von etwa 20 bis 90 Gew. % und/oder Poly(D,L-lactid-co-glycolid) mit einem Anteil von Glycolid in einem Bereich von etwa 10 bis etwa 50 Gew. %. Die Gewichtsprozentangaben für die Anteile der Comonomeren beziehen sich jeweils auf die Gesamtmenge des Polyester-Copolymers. Diese erfindungsgemäßen Polyester-Copolymere sind kostengünstig und einfach herzustellen und erlauben einen vielfältigen Einsatz der aus diesen oder Mischungen dieser hergestellten Formkörper auf verschiedensten medizinischen Anwendungsgebieten.

Die erfindungsgemäßen Polyester-Copolymere weisen bevorzugt eine inhärente Viskosität von etwa 0,5 dl/g oder größer auf. Die inhärente Viskosität wird in Übereinstimmung mit der Meßvorschrift DIN 51562 bei einer Temperatur von 25 ± 0,02° C in Chloroform bestimmt.

Bevorzugt ist die Glasübergangstemperatur und die Schmelztemperatur der erfindungsgemäßen Polyester um etwa 2° C bis etwa 30° C zu niedrigeren Temperaturen im Vergleich zu unvernetzten Polyestern verschoben. Die Glasübergangstemperatur und die Schmelztemperatur sind Parameter, welche über die Kristallinität von polymeren Materialien Auskunft geben. Die erfindungsgemäßen Polyester schädigen und reizen organisches Gewebe allenfalls geringfügig bis überhaupt nicht.

Das in der Vernetzungsreaktion bei der Herstellung des erfindungsgemäßen Polyesters verwendete Peroxid wird in einem Anteil von ungefähr 0,01 Gew. % bis ungefähr 20 Gew. %, besonders bevorzugt von ungefähr 0,1 Gew. % bis ungefähr 5 Gew. %, bezogen auf das Gesamtgewicht des Polyesters, dem Polyester zugefügt. Innerhalb dieses Bereiches ist ein starker Anstieg des mittleren Molekulargewichtes zu beobachten, ebenso löst sich ein entsprechend hergestellter erfindungsgemäßer Polyester nicht auf, sondern quillt zu einem schwammartigen, unstabilen Netzwerk an. Eine Erhöhung des Peroxid-Gehaltes auf über 20 Gew. %, bezogen auf das Gesamtgewicht des Polyesters, führt nur zu einer lokalen Vernetzung, und dementsprechend hydrolisieren die aus diesen Polyestern hergestellten Formkörper und sind nicht für medizinische Zwecke einsetzbar. Weiterhin wird bei derartigen Polyestern die Herstellung und Weiterverarbeitung derselben erschwert, da die erhaltene Reaktionsmischung nur unzureichend aufschmelzbar ist.

In der Vernetzungsreaktion zur Herstellung des erfindungsgemäßen Polyesters werden als Peroxide 2,5-Dimethyl-2,5-di(tert.-butylperoxy)hexan (DHBP), 1,3-Di(2-tert.-butylperoxy-isopropyl)benzol (DIPP), tert.-Butyl-cumyl-peroxid (BCUP), Dicumylperoxid (DCUP), Di(tert.-butyl)peroxid (DTBP), 2,5-Dimethyl-2,5-di(tert.-butylperoxy)hexin(3) (DYBP), Di(2,4-chlorbenzoyl)peroxid (DCCBB), Di(4-methyl-benzoyl)peroxid (BMBP), n-Butyl-4,4-di(tert.-butylperoxy)valerat, 3,3-Di(tert.-butyl-peroxy)ethylbutyrat oder eine beliebige Mischung daraus verwendet. Besonders bevorzugte Peroxide sind 2,5-Dimethyl-2,5-di(tert.-butylperoxy)hexan, tert.-Butyl-cumyl-peroxid und/oder 1,3-Di(2-tert.-butylperoxy-isopropyl)benzol aufgrund ihres im optimalen Bereich liegenden Aktiv-Sauerstoff-Gehalts und ihrer hohen Reaktionsfähigkeit bei gleichzeitig guter Verarbeitbarkeit. Selbstverständlich können auch andere Peroxide mit vergleichbaren Eigenschaften eingesetzt werden.

Die verwendeten Peroxide sind bevorzugt flüssig oder niedrigschmelzend oder werden in Lösung oder im Gemisch mit Füllstoffen eingesetzt. Dies erleichtert eine homogene Verteilung der Peroxide in dem Polyesterausgangsmaterial.

Bevorzugt weist das Peroxid einen Aktiv-Sauerstoff-Gehalt von ungefähr 1 Gew. % bis ungefähr 15 Gew. %, bevorzugt etwa 2 Gew. % bis etwa 10 Gew. %, bezogen auf die Gesamtmenge an Peroxid, auf. Der Aktiv-Sauerstoff-Gehalt der Peroxide entspricht der Anzahl der im Peroxid-Molekül enthaltenen Peroxy-Gruppen und ist somit ein Maß für die von einem Peroxid lieferbare Menge an Radikalen. Aus einer jeden Peroxy-Gruppe können durch Spaltung maximal 2 Radikale entstehen. Bei Verwendung von Peroxiden mit einem Aktiv-Sauerstoff-Gehalt von ungefähr 1 Gew. % bis ungefähr 15 Gew. %, bezogen auf die Gesamtmenge an Peroxid, läßt sich eine ausreichende Vernetzung der polymeren Ausgangsmaterialien erzielen. Der Grad der Vernetzung ist vom Aktiv-Sauerstoff-Gehalt des verwendeten Peroxids abhängig. Vorteilhafterweise verläuft bei Aktiv-Sauerstoff-Gehalten des Peroxids in einem Bereich von etwa 2 Gew. % bis etwa 10 Gew. %, bezogen auf die Gesamtmenge an Peroxid, die Vernetzungsreaktion äußerst rasch und vollständig ab, wodurch ein schneller Fertigungsdurchlauf erreicht wird. Hierdurch werden die Herstellungskosten des erfindungsgemäßen Polyesters deutlich gesenkt.

Zur Verstärkung des erfindungsgemäßen Polyesters können diesem bevorzugt als Zuschläge Hydroxylapatit in einer Menge von etwa 1 bis etwa 50 Gew. %, bezogen auf das Gesamtgewicht des Polyesters, und/oder Tricalciumphosphat in einer Menge von etwa 1 bis 50 Gew. %, bezogen auf das Gesamtgewicht des Polyesters, zugefügt werden. Über diese Zuschläge lassen sich die mechanischen Eigenschaften des erfindungsgemäßen Polyesters variieren. Sowohl Hydroxylapatit als auch Tricalciumphosphat sind Materialien, welche im Organismus, in welchen aus den erfindungsgemäßen Polyestern hergestellte Formkörper eingesetzt werden, vorhanden sind. Reizungen des umliegenden Gewebes bei Abbau des resorbierbaren Polyesters treten somit nicht auf. Diese Zuschläge können über normale Stoffwechselvorgänge im Organismus ausgeschieden werden.

Niedermolekulare resorbierbare Polyester, aber auch von diesen verschiedene Polyester und/oder Polyvinylalkohol können dem resorbierbaren Polyester als Vernetzungshilfsmittel zugesetzt werden. Diese Vernetzungshilfsmittel stellen weitere reaktive Gruppen zur Verfügung, welche die Vernetzungsreaktion beschleunigen. Hierdurch wird vorteilhafterweise eine weitere Reduzierung der Herstellungskosten des erfindungsgemäßen Polyesters erreicht.

Die erfindungsgemäßen Polyester sind bevorzugt nach 50 Wochen Hydrolyse in einer Phosphat-Pufferlösung mit einem pH-Wert von 7,4 und einer Temperatur von 37° C zu wenigstens ca. 40 %, bezogen auf die Gesamtmasse des Polyesters, abgebaut. Eine derartige Degradationszeit ist vorteilhaft für die Verwendung des erfindungsgemäßen Polyesters als Gefäßprothese und künstlicher Bandersatz. Die Gesamthydrolysezeit beträgt ca. 60 bis 70 Wochen.

Die Erfindung betrifft weiterhin ein Verfahren zur Herstellung des erfindungsgemäßen Polyesters, bei welchem in einem ersten Schritt das Polyester-Material mit einer Lösung eines Peroxids versetzt wird und in einem zweiten Schritt das mit dem Peroxid versetzte Polyester-Material mittels Spritzguß, Extrusion und/oder Formpressen verarbeitet wird.

Das erfindungsgemäße Verfahren ermöglicht vorteilhaft eine kostengünstige Herstellung des erfindungsgemäßen Polyesters. Um eine unerwünschte Vorvernetzung des Reaktionsgemisches zu vermeiden, werden alle Komponenten des Reaktionsgemisches nacheinander, beispielsweise auf einem Walzenstuhl oder in einem Schneckenkneter, Innenmischer oder Rührwerk, zusammengegeben, wobei die thermisch empfindlichen Peroxide bevorzugt zuletzt eingemischt werden. Es muß darauf geachtet werden, daß während des Mischungsvorganges die Massetemperatur nicht zu stark ansteigt, eventuell muß für eine zusätzliche Kühlung gesorgt werden, um die unerwünschte Vorvernetzung des Reaktionsgemisches zu vermeiden. Von besonderem Vorteil ist es, wenn das Reaktionsgemisch schon vor der Verarbeitung leicht erwärmt wird, so daß das verwendete Peroxid vom verwendeten Polymermaterial aufgesogen werden kann. Auf diese Weise wird die Gefahr einer Kettenreaktion und damit einer Explosion drastisch verringert.

Vorzugsweise wird das Polymer in Pulverform vorgelegt, wobei eine optimale Durchmischung mit dem gelösten flüssigen Peroxid durch Diffusionsvorgänge erzielbar ist.

Bei der zuvor angesprochenen Erwärmung des Polymermaterials muß gewährleistet sein, daß die erreichte Materialtemperatur unterhalb der sogenannten Scorch-Temperatur bleibt, bei der der Zerfall des Peroxids und damit eine unerwünschte Vorvernetzung des Polymers einsetzt. Die Scorch-Temperatur geeigneter Peroxide liegt in der Regel im Bereich von 60 bis 150 °C.

Bevorzugt wird in dem erfindungsgemäßen Verfahren gleichzeitig mit dem zweiten Schritt die Vernetzung durchgeführt. Dies senkt die Produktionskosten des erfindungsgemäßen Polyesters beträchtlich, da nicht in einem zusätzlichen dritten Schritt eine Vernetzung, beispielsweise durch UV-Strahlung, vorgenommen werden muß.

Die Weiterverarbeitung des Reaktionsgemisches wird bevorzugt im zweiten Schritt in Abhängigkeit des verwendeten Peroxids bei einer Temperatur von etwa 120° C bis etwa 230° C durchgeführt, wobei die Dauer der Weiterverarbeitung ungefähr 0,5 bis ungefähr 30 Minuten, bevorzugt ungefähr 1 bis ungefähr 10 Minuten, beträgt. Besonders bevorzugt für die Weiterverarbeitung des Reaktionsgemisches im zweiten Schritt ist eine Temperatur in einem Bereich von etwa 140° C bis 190° C. Bei diesen Temperaturen wird eine schnelle und vollständige Reaktion des verwendeten polymeren Materials mit dem eingesetzten Peroxid erreicht. Die Wahl der Vernetzungstemperatur wird bevorzugt so getroffen, daß diese ca. 30 bis 40 °C oberhalb der Scorch-Temperatur des jeweils verwendeten Peroxides liegt.

Das in dem erfindungsgemäßen Verfahren verwendete unvernetzte Polyester-Material weist bevorzugt eine inhärente Viskosität von ungefähr 0,5 dl/g bis ungefähr 7,0 dl/g, bevorzugt 1,0 dl/g bis 7,0 dl/g, auf. Die inhärente Viskosität wird in Übereinstimmung mit der Meßvorschrift DIN 51562 bei einer Temperatur von 25 ± 0 02° C in Chloroform bestimmt. Polyester-Materialien mit einer solchen inhärenten Viskosität eignen sich hervorragend zur Herstellung von Formkörpern für medizinische Anwendungen gemäß dem erfindungsgemäßen Verfahren. Durch Änderung der inhärenten Viskosität des Polyester-Materials in diesem Bereich lassen sich die mechanischen Eigenschaften der aus diesen hergestellten Formkörper gezielt beeinflussen.

Schließlich betrifft die Erfindung einen Formkörper, welcher aus einem erfindungsgemäßen Polyester hergestellt ist. Dieser Formkörper kann beispielsweise als Gelenkprothese oder als künstliches Band ausgeformt sein. Weiterhin kann er auch in der Osteosynthese, beispielsweise in Form von Draht, Nägeln, Schrauben oder Platten, verwendet werden, sowie als Nahtmaterial, Wundverschlußmaterial oder als Wirkstoffträger für Arzneimittel in Form von Implantaten ausgeformt werden.

Diese und weitere Vorteile der Erfindung werden im folgenden anhand der Beispiele und der Zeichnung noch näher erläutert. Die Zeichnung zeigt im einzelnen:

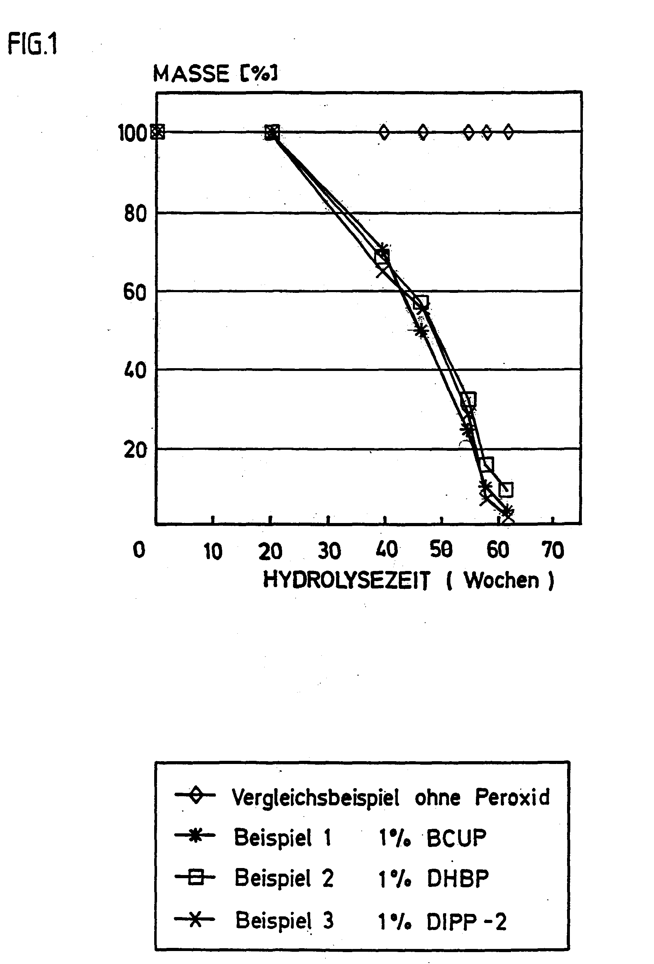

Figur 1: Auftragung der Abnahme des Polymergewichtes gegen die Hydrolyse-Zeit eines aus dem erfindungsgemäßen Polyesters hergestellten Formkörpers.

Als polymeres Material wurde in den nachfolgend beschriebenen Beispielen Resomer B 10 (Boehringer KG, Ingelheim am Rhein) in Form eines Granulates verwendet. Resomer B 10 ist ein Copolymer aus 80 Gew. % eines Copolymeren aus Poly(L-lactid-co-D,L-lactid) in einem Verhältnis von 90:10 sowie 20 Gew. % eines Copolymeren aus Poly(D,L-lactid) bei einem Verhältnis von 50:50 (racemische Mischung aus Poly-L-lactid und Poly-D-lactid). Es weist eine inhärente Viskosität von 1,6 - 2,2 dl/g, gemessen nach DIN 51562 bei $25 \pm 0,02°$ C an einer Lösung von $500 \pm 5$ mg Resomer B 10 in 400 ml Chloroform, auf.

Dieses wird zuerst fein gemahlen auf eine Korngröße von 0,1 bis 2 mm und anschließend unter leichter Erwärmung mit einer Peroxid-Lösung derart vernetzt, daß das flüssige Peroxid in das Polymermaterial eindringen kann. Dies kann durch die Verwendung beispielsweise eines Schnecken- oder Taumelmischers unterstützt werden. Das erhaltene Reaktionsgemisch wird einer Formpresse zugeführt und bei einer Temperatur von 180° C bis 200° C und einer Preßzeit zwischen 2 und 15 Minuten geformt. Die solchermaßen erhaltenen aus dem erfindungsgemäßen Polyester hergestellten Platten wurden mittels der folgenden Methoden untersucht:

Geltest

Ein Probekörper mit einem Volumen von weniger als 5 cm$^3$ und mehr als 1,5 cm$^3$ wird auf ein Milligramm genau gewogen. Anschließend wird er in einem Soxhlett-Extraktionsgefäß 8 Stunden $\pm$ 5 Minuten mit siedendem Chloroform extrahiert. Nach der Extraktion wird die Extraktionshülse mit dem nicht löslichen Polymerkörper zuerst 24 Stunden bei Raumtemperatur, dann 4 Stunden bei 100° C im Umlufttrockenschrank und anschließend nochmals 24 Stunden im Exsikkator getrocknet. Hiernach wird die Masse des Restkörpers bestimmt. Die Auswertung erfolgt nach folgender Gleichung:

$$G = (M2/M1) \cdot 100$$

G:        Gelanteil
M1:       Masse vor Extraktion
M2:       Masse nach Extraktion

Differentialkalorimetrie (DSC)

Die DSC-Messungen wurden bei einer kontinuierlichen Erwärmung von 20° C in der Minute von Raumtemperatur bis 220° C in zwei Läufen ermittelt. Der 2. Lauf der DSC-Untersuchung wurde nach Abkühlung der Probe nach dem 1. Lauf durchgeführt. Die DSC-Messungen wurden nach einer Alterung der Proben in einem Umluftofen bei 100° C für 24 Stunden unter den gleichen Bedingungen wiederholt. Es wurden die Glasübergangstemperaturen $Tg^1$ und $Tg^2$, die Schmelztemperatur $T_{melt}$ und die Kristallisationsenergie $E_{krist}$ bestimmt. Die DSC-Messungen wurden an zwei verschiedenen Proben durchgeführt.

Hydrolyse-Versuche

Bei den aus dem erfindungsgemäßen Polyester hergestellten Platten wurde die Hydrolyse-Zeit bei 37° C in einer Phosphat-Pufferlösung mit einem pH-Wert von 7,4 über einen Zeitraum von ca. 60 Wochen bestimmt. Die Ergebnisse sind in Figur 1 gezeigt.

Weiterhin wurden folgende Parameter der aus dem erfindungsgemäßen Polyester hergestellten Platten ermittelt:

Dichte (DIN 53479/B), Mikroshore-Härte D (DIN 53519), Zugversuch an ausgestanzten Probekörpern (DIN 53455), sowohl im Ausgangszustand als auch nach 12 Wochen Lagerung bei 37° C sowie Schlagzugversuche (DIN 53 448).

Die Dichte und die Mikroshore-Härte D wurden an drei unterschiedlichen Stellen (Entnahmestellen 1-3) der hergestellten Proben gemessen, um etwaige Inhomogenitäten in der Probe festzustellen.

Vergleichsbeispiel

Es wurde eine Platte aus Resomer B 10 ohne Zusatz von Peroxid durch Formpressen bei 200° C über 2 Minuten hergestellt. Die Meßergebnisse sind in Figur 1 und in den folgenden Tabellen gezeigt.

Beispiel 1

Es wurde eine Platte aus Resomer B 10 mit Zusatz von 1 Gew. % tert.-Butyl-cumyl-peroxid (BCUP), bezogen auf das Gesamtgewicht des Polyesters, bei 180 bis 190° C durch Formpressen über 10 Minuten hergestellt und unter Druck abgekühlt. Die ermittelten Meßergebnisse können der Figur 1 und den folgenden Tabellen entnommen werden.

Beispiel 2

Es wurde eine Platte aus Resomer B 10 unter Zusatz von 2,5-Dimethyl-2,5-di(tert.-butylperoxy)hexan (DHBP) durch Formpressen bei 180-190° C für 10 Minuten hergestellt und unter Druck abgekühlt. Die Meßergebnisse sind in Figur 1 und den Tabellen enthalten.

Beispiel 3

Es wurde eine Platte aus Resomer B 10 unter Zusatz von 1 Gew. %, bezogen auf das Gesamtgewicht des Polyesters an 1,3-Di(2-tert.-butylperoxy-isopropyl)benzol (DIPP-2) durch Formpressen bei 180-190° C für 15 Minuten hergestellt und unter Druck abgekühlt. Die Meßergebnisse sind in Figur 1 und den Tabellen dargestellt.

Tabelle 1

| Dichtemessung | | | |
|---|---|---|---|
| Dichte [g/cm$^3$] | Entnahmestelle 1 | Entnahmestelle 2 | Entnahmestelle 3 |
| Vergleichs-beispiel | 1,25 | 1,25 | 1,26 |
| Beispiel 1 | 1,25 | 1,25 | 1,25 |
| Beispiel 2 | 1,24 | 1,25 | 1,25 |
| Beispiel 3 | 1,26 | 1,26 | 1,25 |

Tabelle 2

| Microshore-Härte-D-Messung; Proben im Schliff eingebettet; 3 Messungen pro Entnahmestelle | | | |
|---|---|---|---|
| Microshore D | Entnahmestelle 1 | Entnahmestelle 2 | Entnahmestelle 3 |
| Vergleichs-beispiel | 82-84 | 82-83 | 81-82 |
| Beispiel 1 | 80 | 80 | 80 |
| Beispiel 2 | 81-82 | 80-82 | 80-82 |
| Beispiel 3 | 82-84 | 82-84 | 84 |

Tabelle 3

| DSC-Untersuchung; 1. und 2. Lauf 20° C/min bis 220° C; Probe 1 | | | | | | |
|---|---|---|---|---|---|---|
| Material | $T_g1$ [°C] | $T_{melt}1$ [°C] | $E_{krist.}1$ [J/g] | $T_g2$ [°C] | $T_{melt}2$ [°C] | $E_{krist.}2$ [J/g] |
| Vergl. Beispiel | 65 | - | - | 63,2 | - | - |
| Bei-spiel 1 | 61,2 | - | - | 61,6 | - | - |
| Bei-spiel 2 | 60,5 | - | - | 63,4 | - | - |
| Bei-spiel 3 | 63,2 | 147,3 | 7,2 | 61,5 | - | - |

Tabelle 4

| DSC-Untersuchung; 1. und 2. Lauf, 20° C/min bis 220° C; Probe 2 | | | | | | |
|---|---|---|---|---|---|---|
| Material | $T_g1$ [°C] | $T_{melt}1$ [°C] | $E_{krist.}1$ [J/g] | $T_g2$ [°C] | $T_{melt}2$ [°C] | $E_{krist.}2$ [J/g] |
| Vergl.-beispiel | 64,7 | - | - | 62,5 | - | - |
| Bei-spiel 1 | 61,6 | - | - | 62,2 | - | - |
| Bei-spiel 2 | 59,7 | - | - | 64,1 | - | - |
| Bei-spiel 3 | 63,5 | 148,4 | 5,7 | 62,3 | - | - |

Tabelle 5

| DSC-Untersuchung nach Alterung im Umluftofen bei 100° C für 24h; 1. und 2. Lauf, 20° C/min bis 220° C; Probe 1 | | | | | | |
|---|---|---|---|---|---|---|
| Material | $T_g1$ [°C] | $T_{melt}1$ [°C] | $E_{krist.}1$ [J/g] | $T_g2$ [°C] | $T_{melt}2$ [°C] | $E_{krist.}2$ [J/g] |
| Vergl. Beispiel | 65,2 | 153,9 | 27,5 | 62,6 | - | - |
| Bei-spiel 1 | 57,4 | 145 | 25,1 | 61,8 | - | - |
| Bei-spiel 2 | 57,7 | 146,1 | 26,7 | 62,1 | - | - |
| Bei-spiel 3 | 57,9 | 147,9 | 29,1 | 61,7 | - | - |

Tabelle 6

| DSC-Untersuchungen nach Alterung im Umluftofen bei 100° C für 24h; 1. und 2. Lauf, 20° C/min bis 220° C; Probe 2 | | | | | | |
|---|---|---|---|---|---|---|
| Material | $T_g1$ [°C] | $T_{melt}1$ [°C] | $E_{krist.}1$ [J/g] | $T_g2$ [°C] | $T_{melt}2$ [°C] | $E_{krist.}2$ [J/g] |
| Vergl. Beispiel | 63,7 | 153,9 | 27,6 | 63,4 | - | - |
| Bei-spiel 1 | 57,9 | 145,1 | 26,3 | 63,8 | - | - |
| Bei-spiel 2 | 57,4 | 145 | 24,9 | 62,3 | - | - |
| Bei-spiel 3 | 58,2 | 147,1 | 29,3 | 61,5 | - | - |

Tabelle 7

| Zugversuche | | | | | |
|---|---|---|---|---|---|
| Material | Zugfe-stigkeit [N/mm$^2$] | Maximal-kraft [N] | Dehnung bei Streck-spannung [%] | Bruch-spannung [N/mm$^2$] | Bruch-dehnung [%] |
| Vergl.-beispiel | 62,4 | 152 | 6,1 | 51 | 16,5 |
| Bei-spiel 1 | 58,8 | 140,3 | 5,7 | 50,2 | 10,2 |
| Bei-spiel 2 | 60 | 151,2 | 5,4 | 52,4 | 7,6 |
| Bei-spiel 3 | 63,2 | 169,4 | 5,7 | 56,7 | 7,3 |

Tabelle 8

| Zugversuche nach 12 Wochen Auslagerung bei 37° C | | | | | |
|---|---|---|---|---|---|
| Material | Zugfe-stigkeit [N/mm$^2$] | Maximal-kraft [N] | Dehnung bei Streck-spannung [%] | Bruch-spannung [N/mm$^2$] | Bruch-dehnung [%] |
| Vergl. Beispiel | 52 | 145,6 | 9,6 | 45,2 | 17 |
| Bei-spiel 1 | 41,5 | 116,2 | 7,4 | 39,2 | 8,75 |
| Bei-spiel 2 | 39,8 | 111,4 | 7,8 | 39,1 | 8,1 |
| Bei-spiel 3 | 47 | 131,7 | 7,2 | 46,7 | 7,2 |

Tabelle 9

| Schlagzugversuch | |
|---|---|
| Material | Schlagzugzähigkeit |
| Vergleichsbeispiel | 75 |
| Beispiel 1 | 77 |
| Beispiel 2 | 60 |
| Beispiel 3 | 72,5 |

Tabelle 10

| Geltest nach Extraktion im Soxhlett-Extraktor, Einwaage 0,5 g | |
|---|---|
| Material | Vernetzte Anteile [ Gew. %] |
| Vergleichsbeispiel | 0 |
| Beispiel 1 | 36,6 |
| Beispiel 2 | 38,7 |
| Beispiel 3 | 27,6 |

Bezüglich der Dichte (Tabelle 1) und der Microshore-Härte D (Tabelle 2) sind keine signifikanten Unterschiede zwischen dem Vergleichsbeispiel und den Beispielen 1 bis 3 festzustellen. Aus den fast identischen Dichte- und Härte-Werten an den Entnahmestellen 1-3 ist zu schließen, daß die Proben ein hohes Maß an Homogenität aufweisen, d.h. das Peroxid gleichmäßig verteilt wurde.

Bei den DSC-Untersuchungen (Tabellen 3 und 4) ist im Durchschnitt eine Absenkung der Glasübergangstem-peraturen Tg$^1$ und Tg$^2$ bei allen vernetzten Proben im Vergleich zu der unvernetzten Vergleichsprobe im ersten Lauf erfolgt. Die größte Erniedrigung der Glasübergangstemperatur um 5° C wurde im Beispiel 2 beobachtet. Im zweiten Lauf der DSC-Untersuchungen unterscheiden sich die Glasübergangstemperaturen nur noch geringfügig. Dies zeigt, daß signifikante Werkstoffänderungen nicht stattgefunden haben. Bei den DSC-Untersuchungen nach Alterung bei 100° C im Umluftofen für 24 Stunden (Tabellen 5 und 6) zeigen sich deutliche Unterschiede zwischen dem Vergleichs-beispiel und den vernetzten Beispielen 1 bis 3 im ersten Lauf sowohl bei den Glasübergangstemperatur wie auch in der Schmelztemperatur.

Signifikante Unterschiede in der Zugfestigkeit und im Dehnungsverhalten (Tabelle 7) zwischen der unvernetzten Vergleichsprobe und den vernetzten Proben konnten nicht festgestellt werden. Eine Wiederholung dieser Messungen nach 12 Wochen Auslagerung bei 37° C (Tabelle 8) zeigt eine deutliche Abnahme insbesondere der vernetzten Proben, sowohl in der Zugfestigkeit als auch in der Bruchspannung. Dies weist auf eine beginnende Hydrolyse der aus dem erfindungsgemäßen Polyester hergestellten Proben hin.

In den Schlagzugversuchen (Tabelle 9) konnten ebenfalls keine signifikanten Unterschiede zwischen der unvernetzten Vergleichsprobe und den vernetzten Proben festgestellt werden.

Drastische Unterschiede zeigen sich jedoch im Geltest nach Extraktion im Soxhlett-Extraktor (Tabelle 10). Während die unvernetzte Vergleichsprobe sich innerhalb von 24 Stunden vollständig auflöst und einen Vernetzungsanteil von 0 % aufweist, konnten bei den aus dem erfindungsgemäßen Polyester hergestellten Proben Vernetzungsanteile von 27,6 bis 62,5 Gew. %, bezogen auf die Gesamtmenge des zu lösenden Polyesters, beobachtet werden. Die Proben der Beispiele 1 bis 3 zeigen einen dicken, zusammenhängenden Gelkörper.

Figur 1 zeigt eine Auftragung der Masse eines aus dem erfindungsgemäßen Polyester hergestellten Formkörpers in Prozenten gegen die Hydrolyse-Zeit in Wochen. Während im unvernetzten Vergleichsbeispiel auch nach 62 Wochen keinerlei Abnahme der Masse festgestellt werden kann, weisen die aus dem erfindungsgemäßen Polyester hergestellten Proben einen Massenabbau von über 40 %, bezogen auf die Gesamtmasse des Polyesters, nach ca. 50 Wochen auf. Nach 62 Wochen beträgt die Restmasse nur noch etwa 5 bis 10 %. Die mit dem erfindungsgemäßen Polyester erreichten Hydrolyse-Zeiten liegen somit in einem Bereich, welcher die Anwendung des erfindungsgemäßen Polyesters insbesondere als Gefäßprothese und als künstlicher Bandersatz ermöglicht.

Wie aus Figur 1 ersichtlich, setzt der Massenabbau des erfindungsgemäßen Polyesters nach 20 Wochen ein. Davor ist keine Degradation festzustellen. Der Massenabbau erfolgt fast linear mit gleichmäßiger Geschwindigkeit, was besonders vorteilhaft ist, da bei Implantation der Formteile in einen menschlichen oder tierischen Körper so das körpereigene Gewebe gleichmäßig die Formteile überwachsen kann. Die Heilung der betroffenen Knochen- bzw. Gewebepartien wird so optimal unterstützt.

## Patentansprüche

1.  Resorbierbarer, aliphatisch gesättigter Polyester, welcher in einer Vernetzungsreaktion mit einem Peroxid hergestellt ist, mit einem in siedendem Chloroform unlöslichen Anteil von etwa 10 Gew. % oder mehr, bezogen auf die Gesamtmenge des Polyesters.

2.  Polyester nach Anspruch 1, dadurch gekennzeichnet, daß der Polyester ein Homopolymer, Random- oder Block-Copolymer oder -Terpolymer eines zyklischen Esters oder eine beliebige Mischung daraus umfaßt.

3.  Polyester nach Anspruch 2, dadurch gekennzeichnet, daß der zyklische Ester L-Lactid, D-Lactid, Meso-Lactid, Glycolid, Trimethylencarbonat, Dioxanon, Caprolacton oder eine beliebige Mischung daraus umfaßt.

4.  Polyester nach Anspruch 2 oder 3, dadurch gekennzeichnet, daß das Polyester-Homopolymer Poly(L-lactid), Poly(D-lactid), Poly(D,L-lactid), Poly(meso-lactid) oder eine beliebige Mischung daraus umfaßt.

5.  Polyester nach Anspruch 4, dadurch gekennzeichnet, daß das Polyester-Homopolymer Poly(L-lactid) und/oder Poly(D,L-lactid) mit einer inhärenten Viskosität im Bereich von etwa 1,0 dl/g oder größer ist.

6.  Polyester nach Anspruch 2 oder 3, dadurch gekennzeichnet, daß das Polyester-Copolymer Poly(L-lactid-co-D,L-lactid), Poly(L-lactid-co-meso-lactid), Poly(L-lactid-co-glycolid), Poly(L-lactid-co-trimethylencarbonat), Poly(L-lactid-co-ε-caprolacton), Poly(D,L-lactid-co-meso-lactid), Poly(D,L-lactid-co-glycolid), Poly(D,L-lactid-co-trimethylencarbonat), Poly(D,L-lactid-co-ε-caprolacton), Poly(meso-co-glycolid), Poly(meso-co-trimethylencarbonat), Poly(meso-co-ε-caprolacton), Poly(glycolid-co-trimethylen-carbonat), Poly(glycolid-co-ε-caprolacton) oder eine beliebige Mischung daraus oder mit einem Polyester-Homopolymeren gemäß Anspruch 4 oder 5 umfaßt.

7.  Polyester nach Anspruch 6, dadurch gekennzeichnet, daß das Polyester-Copolymer Poly(L-lactid-co-D,L-lactid) mit einem Anteil von D,L-Lactid in einem Bereich von etwa 10 bis etwa 50 Gew. %, Poly(L-lactid-co-trimethylencarbonat) mit einem Anteil von Trimethylencarbonat in einem Bereich von etwa 10 bis etwa 50 Gew. %, Poly(D,L-lactid-co-trimethylencarbonat) mit einem Anteil von Trimethylencarbonat in einem Bereich von etwa 20 bis 90 Gew. % und/oder Poly(D,L-lactid-co-glycolid) mit einem Anteil von Glycolid in einem Bereich von etwa 10 bis etwa 50 Gew. % umfaßt, jeweils bezogen auf die Gesamtmenge des Polyester-Copolymeren.

8.  Polyester nach einem der Ansprüche 6 oder 7, dadurch gekennzeichnet, daß das Polyester-Copolymere eine inhärente Viskosität von etwa 0,5 dl/g oder größer aufweist.

9. Polyester nach einem der Ansprüche 1 bis 8, dadurch gekennzeichnet, daß dessen Glasübergangstemperatur und Schmelztemperatur um etwa 2° C bis etwa 30° C zu niedrigeren Temperaturen im Vergleich zum unvernetzten Polyester verschoben ist.

10. Polyester nach einem der Ansprüche 1 bis 9, dadurch gekennzeichnet, daß das Peroxid in einem Anteil von ungefähr 0,01 Gew. % bis ungefähr 20 Gew. %, bevorzugt von ungefähr 0,1 Gew. % bis ungefähr 5 Gew. %, bezogen auf das Gesamtgewicht des Polyesters, zugefügt ist.

11. Polyester nach einem der Ansprüche 1 bis 10, dadurch gekennzeichnet, daß das Peroxid einen Aktiv-Sauerstoff-Gehalt von ungefähr 1 Gew. % bis ungefähr 15 Gew. %, bevorzugt etwa 2 Gew. % bis etwa 10 Gew. %, bezogen auf die Gesamtmenge an Peroxid, aufweist.

12. Polyester nach einem der Ansprüche 1 bis 11, dadurch gekennzeichnet, daß das Peroxid 2,5-Dimethyl-2,5-Di(tert.-butylperoxy)hexan, 1,3-Di(2-tert.-butylperoxy-isopropyl)benzol, tert.-Butyl-cumyl-peroxid, Dicumylperoxid, Di(tert.-butyl)peroxid, 2,5-Dimethyl-2,5-di(tert.-butylperoxy)hexin(3), Di(2,4-chlorbenzoyl)peroxid, Di(4-methylbenzoyl)peroxid, n-Butyl-4,4-di(tert.-butylperoxy)valerat, 3,3-Di(tert.-butyl-peroxy)ethylbutyrat oder eine beliebige Mischung daraus umfaßt.

13. Polyester nach einem der Ansprüche 1 bis 12s, dadurch gekennzeichnet, daß diesem als Zuschläge Hydroxylapatit in einer Menge von etwa 1 bis etwa 50 Gew. %, bezogen auf das Gesamtgewicht des Polyesters, und/oder Trikalziumphosphat in einer Menge von etwa 1 bis etwa 50 Gew. %, bezogen auf das Gesamtgewicht des Polyesters, zugefügt sind.

14. Polyester nach einem der Ansprüche 1 bis 13, dadurch gekennzeichnet, daß diesem als Vernetzungshilfsmittel niedermolekulare resorbierbare Polyester, Polyester und/oder Polyvinylalkohol zugesetzt sind.

15. Polyester nach einem der Ansprüche 1 bis 14, dadurch gekennzeichnet, daß dieser nach 50 Wochen Hydrolyse in einer Phosphatpufferlösung mit einem pH-Wert von 7,4 und einer Temperatur von 37° C zu wenigstens ca. 40 %, bezogen auf die Gesamtmasse des Polyesters, abgebaut ist.

16. Verfahren zur Herstellung eines Polyesters nach einem der Ansprüche 1 bis 15, dadurch gekennzeichnet, daß in einem ersten Schritt das Polyester-Material mit einer Lösung eines Peroxids versetzt wird und in einem zweiten Schritt das mit dem Peroxid versetzte Polyester-Material mittels Spritzguß, Extrusion und/oder Formpressen verarbeitet wird.

17. Verfahren nach Anspruch 16, dadurch gekennzeichnet, daß gleichzeitig mit dem zweiten Schritt die Vernetzung durchgeführt wird.

18. Verfahren nach Anspruch 16 oder 17, dadurch gekennzeichnet, daß im zweiten Schritt die Weiterverarbeitung bei einer Temperatur von etwa 120° C bis etwa 230° C durchgeführt wird und deren Dauer ungefähr 0,5 bis ungefähr 30 min, bevorzugt ungefähr 1 bis ungefähr 10 min, beträgt.

19. Verfahren nach einem der Ansprüche 16 bis 18, dadurch gekennzeichnet, daß das Polyester-Material eine inhärente Viskosität von ungefähr 0,5 dl/g bis ungefähr 7,0 dl/g aufweist.

20. Formkörper, hergestellt aus einem Polyester nach einem der Ansprüche 1 bis 15.

FIG.1

MASSE [%]

HYDROLYSEZEIT ( Wochen )

| | |
|---|---|
| —◇— | Vergleichsbeispiel ohne Peroxid |
| —✳— | Beispiel 1    1% BCUP |
| —▢— | Beispiel 2    1% DHBP |
| —✕— | Beispiel 3    1% DIPP-2 |